# EUROPEAN PATENT APPLICATION

(11) **EP 4 563 815 A1**
(43) Date of publication of application: **04.06.2025**
(21) Application number: 23213591.3
(22) Date of filing: 01.12.2023
(51) Int. Cl.: F03D 17/00

(54) **METHOD FOR SAFETY OPERATION OF A WIND TURBINE**

(71) Applicant: Siemens Gamesa Renewable Energy A/S, 7330 Brande (DK)
(72) Inventor: Schmidt, Soeren Adrian, 7100 Vejle (DK)
(74) Representative: SGRE-Association

(57) **Abstract**

There is described a method for operating a wind turbine, a safety system, and a wind turbine comprising a rotor, at least two pitchable rotor blades, a pitching system, an operation controller and a safety controller. The method comprising the steps of: determine a value for at least one safety paremeters with the safety controller, compare the value of the at least one safety parameters with at least one safety threshold and if the value is different from the at least one safety threshold the safety controller delivers a warning signal to the operation controller and prevents the wind turbine (100) from starting up. Further, a safety system comprising a memory and a processor and means for carrying out the method is also disclosed.

## Description

### TECHNICAL FIELD

The technical filed of the invention is related to methods and systems for operating a wind turbine and in particularly methods and system that will prevent the start up of such a wind turbine.

### TECHNICAL BACKGROUND

As modern wind turbines are getting bigger and more complicated structures to control, the need for protection those structures are also increasing. To achieve high level of safety, various safety systems had been designed and implemented that will protect the wind turbine from various scenarios occuring during the operating life of the wind turbine. These safety systems are either hardware related or software related systems that are applied and affect the wind turbine operation.

Such a system, presented in WO2019/201597A1, protects a wind turbine from operating with a detected fault condition. This system uses a redundant monitoring system to ensure that a fault is actual present during the wind turbine operation and once such scenario is validated, dictates the wind turbine controller to shutdown the operation of the wind turbine in order to protect from being damaged.

Most common, and at the same time most dangerous scenario for a wind turbine, is the case of wind turbine being in an overspeed state due to high winds. An overspeed state is when the wind turbine operation controller is losing the control of the wind turbine operation i.e., not being able to control the pitching system, in combination with high winds, therefore leading the wind turbine to spin uncontrollably. US2011142634A1 discloses a system that will protect the wind turbine from being in overspeed state. The disclosed system employs an auxiliary pitch control system that will be able to bring the wind turbine in shutdown (pitch the blades to a feather position) once it is determined that an overspeed event has occurred.

Most common solutions to safety systems, like the ones disclosed above, is to bring the wind turbine to a shutdown in one way or another. The wind turbine, as a power producing machine, have to be operating and therefore the start or restart of the wind turbine has to be guaranteed as soon as possible.

Thus, there is a need for controlling the operation of the wind turbine in safe manner or safety system that will ensure a safe start or safe restart of the wind turbine that will minimize the risk of the wind turbine run into an event, such as an overspeed event, that will damage the wind turbine and jeopardize its operation.

### SUMMARY

This need may be met by the subject matter of the independent claims of the disclosed invention and the further advantageous embodiments described by the dependent claims of the invention.

According to a first aspect of the invention there is provided a method for controlling the operation of a wind turbine. The same method presented in the first aspect may be equivalently provided for an onshore or an offshore wind turbine, where offshore wind turbine can be either a bottom fixed or fixed to a floating structure. The wind turbine comprising a rotor that includes at least two pitchable rotor blades. The rotor blades are pitchable with the aid of a pitching system. As pitching system shall be understood a system that comprises at least a pitch pressure accumulator and a pitch piston that are able to move the wind turbine blade thereby changing the pitch angle of the wind turbine blade.

The wind turbine shall further comprise an operation controller and a safety controller. The term "operation controller" includes any controller (physical system) that can regulate the operation of the wind turbine. While the term "safety controller" includes any controller (also physical system) that monitors the operation controller and monitors the operation of the wind turbine as this is dictated by an operation controller. Such controllers can be any Programmable Logic Controller (PLC) able to control and monitor the operation of the wind turbine.

The safety controller shall be able to intervene and/or override the operation controller when is needed. To do so, these two controllers can exist in a similar control box within the wind turbine and preferably relate to one each other in stable manner, via connection cables or wireless connection. Alternatively, the two controllers can exist separate from one each other in different configuration and even in different position within the wind turbine, as long as a connection exists between them. Connection should be understood as means for the exchange of data between one each other.

In the main embodiment of the method, the safety controller is able to execute the method steps of determining a value of the for at least at least one safety paremeters, deliver a warning signal to the operation controller when the value of the at least one safety paremeters is outside a safety threshold and prevent the wind turbine from starting up its operation. The safety threshold can be any numerical or digital value or range that assist in the clarification of value of the safety parameter. For example, the range may be a value from 0 to 100 and/or a value like 0 or 1 that is able to establish a numerical range. Any other possible threshold type may equivalently be included with the term threshold.

This aspect of the invention is based on the idea that the safety controller while being able to monitor at least safety related operation parameter can intervene in the starting procedure of the operation controller and prevent the wind turbine from starting its operation when is necessary. In addition, the safety controller delivers a warning signal to the operation controller, in that manner ensures that the operation controller understands why is not "allowed" to initiate a startup sequence. By allowing the safety controller to override the operation controller and prevent the wind turbine from starting to operate when at least one safety parameter is not within acceptable limits ensures that the wind turbine will not face conditions that will risk the damaging, for example an overspeed event due to large error in the pitching system.

According to a further embodiment, the step of preventing the wind turbine from starting up its operation comprises the step of switching off the power from the wind turbine pitching system. This may be done by any of the controllers, operation, or safety. Preferably, the shutting down of power shall be done via the safety controller in order to interrupt fast and in safe manner the starting procedure.

By blocking the operation of the pitching system of the wind turbine in a fast and reliable manner, the wind turbine pitching system will not be able to follow the commands of the operation controller, therefore the pitching sequence needed for starting the wind turbine is aborted. In that manner, a possible operation that will in a damage of the wind turbine can be avoided.

In yet a further embodiment, the method further comprising the step setting the value of the at least one safety parameter to a default value. This can be done directly via the safety controller that either has the default value for the at least one safety parameter embeded within its own memory or this can be provided via the use of an external memory. In another embodiment, the default value may have a value equal to the safety threshold. Also, the default value may have a value that is higher than the safety threshold. By the setting of the safety parameter into a default value, the wind turbine operation can ensure that upon a command for starting or restarting the wind turbine, the safety parameters will not deviate from their safety threshold. The default value can be a minimum value that will ensure the safety operation of the wind turbine respective system.

In yet another embodiment of the invention, when the operation controller receives the warning signal from the safety controller, is also controlling the wind turbine system to bring the value of the at least one safety parameter to be equal to the default value set by the safety controller. For example, the operation controller may adjust one of the rotor system or the pitching system of the wind turbine and assign to any of them the necessary value for operation. It was found advantageous to bring the safety parameter value to a default value that will ensure the safe start or restart of the wind turbine. In that manner, when the wind turbine will try to start again, will be equipped with the correct value for the at least one safety parameter.

According to a further embodiment of the method, it is determined that the at least one safety parameter is a safety parameter related to the rotor of the wind turbine and/or a safety parameter related to the pitching system of the wind turbine.

In yet another aspect of this embodiment, it is specified that the safety parameter is a determined safety parameter related to the position of a rotor lock of the rotor of the wind turbine. Before initiating a starting procedure for a wind turbine, must be ensured that rotor is locked and not able to run freely before the starting procedure is initiated. This can be achieved by ensuring that the rotor lock position is identified as engaged. Commonly, wind turbines have more than our rotor locks, therefore the position of all available rotor locks must be the same for the execution of the method.

In a yet another embodiment, the safety parameter is a parameter related to pitching system. As the pitching system is one of the main drivers that will operate the wind turbine and initiate the starting up of a wind turbine. Before doing so, must be ensured that at least one value of the pressure of the accumulators within pitching system and/or the pitch position and/or the pitch position direction of a pitch piston of the pitching system are within a safe margin that will allow the safe operation the pitching system.

With this aspect it ensured that a pitching system with erroneous values will never be allowed to initiate a starting procedure and avoid the operating of the wind turbine with malfunctioned system. A problematic pitching system will not be able during starting up or normal operation to control the wind turbine within the safety standards i.e., wrongly set pitch angle leads to larger pitch angle errors during the operation of the wind turbine thereby leading the operation of the wind turbine to be less safe.

In another embodiment, the method step of determination of the value of at least one safety parameter may include the determination of the value at least two or three or preferably four safety system. With this additional step, the method can become more robust and essential safer for the wind turbine operation. These additional parameters can be any of the parameters mentioned before as long as they are related to the rotor lock system or the pitching system of the wind turbine.

In another embodiment, the condition of the wind turbine before the execution of the method is specified. The method step prevents the wind turbine from starting up from a standstill condition i.e., the rotor is not rotating, and the wind turbine is not producing energy. This means that the operation controller has already brough the wind turbine into a stop due to fault in the wind turbine or due to a need for servicing the wind turbine. In an alternative embodiment, the wind turbine operation controller had never controlled the operation of the wind turbine and thus never started up the wind turbine. This can be the case for a wind turbine that was recenlty installed and commissioned but was never put into operation. Operation has to be understood as the state of the wind turbine with a rotor rotating and generator producing energy from this rotation. In these cases the connection to the grid or not does not affect the method described.

According to a second aspect of the invention, it is provided a safety system that can carry the method steps of the previous embodiments. The safety system can be an intermediate system that will manage the operation of the two controllers or can also be supervisory system for both. The safety system must include a memory and processor configured to coordinate the operational procedure and having means, for example connection means with the operation and safety controller, to carry out the method as explained with the previous embodiments. Such means may be additional storage, memory and other hardware related means that will facilitate the method and communication between the operation and the safety controller. The safety system may comprise the two necessary controllers within the same physical are or the two controls can be separated but still comprised within the same safety system by means of connections.

According to a last aspect of the invention, it is claimed a wind turbine that comprising a rotor, at least two pitchable rotor blades, a pitching system an operation controller and a safety controller. The wind turbine safety controller determines a value for at least one safety paremeters, delivers a warning signal when the value of the at least one safety parameters is below a safety threshold value, and prevents the wind turbine from starting up.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

### DRAWINGS DESCRIPTION

Figure 1 shows a wind turbine, more specifically a wind turbine top part with systems needed for the various embodiments of the method
Figure 2 shows a flowchart of the method of for controlling the operation of a wind turbine according to an embodiment of the invention
Figure 3 shows an exemplary block diagram of a safety system according to an embodiment of the invention

### DETAILED DESCRIPTION

The illustration in the drawings is schematic. It is noted that is possible that in different figures, similar and/or identical elements may be provided with same reference numerals or with different ones.

Embodiments of the invention will be explained in further details. Its should be understood that the disclosed in invention is not intended as to be limited in the form disclosed but additionally to cover all modifications, equivalents and/or alternatives falling within the scope of the invention as this described by the claims.

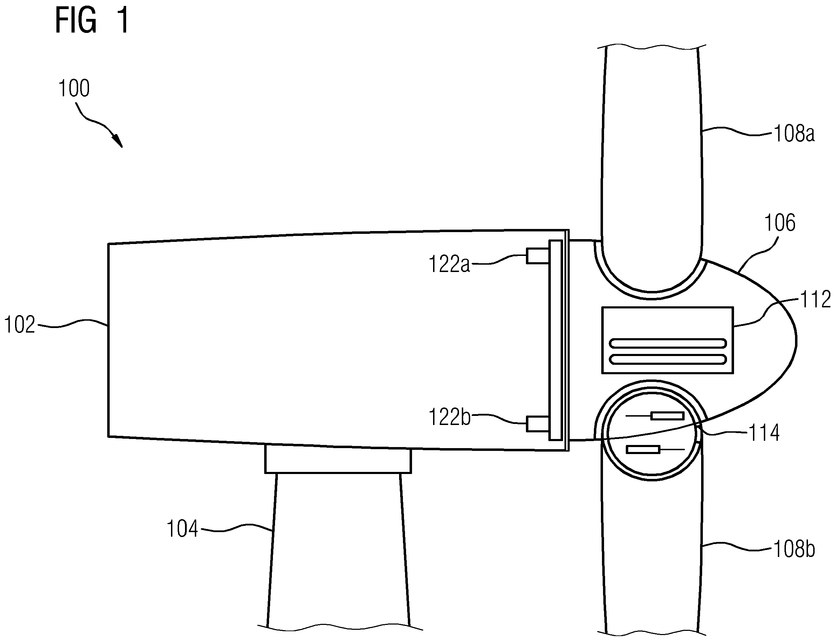

In Figure 1, a wind turbine 100 is shown. While not fully shown, the wind turbine 100 can be an onshore wind turbine, an offshore wind turbine meaning a wind turbine with a fixed connection to earth or alternative the wind turbine 100 can also be a floating wind turbine, meaning a wind turbine that is not affixed with earth in firm mechanical connection rather floats in a support structure in the top of seabed. The wind turbine comprises a nacelle 102 and a tower 104. Additionally, the wind turbine 100 comprises a rotor 106 fixed to the nacelle in mechanical connection. Within the nacelle, tower and rotor various components are existing but not depicted within figure 1 for simplicity reasons. Such components may be the generator of the wind turbine, electrical components such as converter and transformers, controllers, cables, and all necessary electrical and mechanical components that participate in the operation of the wind turbine. Further in figure 1 the wind turbine comprises at least two wind turbine blades 108a and 108b connected to the wind turbine rotor 106. When the wind turbine blades 108a and 108b have the correct pitch angle, they drive the wind turbine rotor 106 to rotate and the wind turbine 100 is operating and producing energy.

The wind turbine rotor 106 of figure 1 comprises a pitching system. The pitching system itself comprises at least pitch pressure accumulators 112 and pitch pistons 114 for driving the wind turbine rotor blades 108a and 108b in the correct pitch angles for the operation of the wind turbine. Typically, a pitch pressure accumulator 112 comprising nitrogen gas is controlled by charging and discharging, therefore changing the pressure within the accumulator. This lead in pressure changes that drive the pitch pistons 114 where themselves are changing the pitch angle of the wind turbines blades 108a and 108b. In a normal operating scenario, for example during a starting procedure where the intention is to control the wind turbine 100 to an operating state, the wind turbine 100 operation controller will control the wind turbine blades 108a and 108b to have a pitch angle that will be able advantage of the aerodynamic effect of the wind. To achieve this specific angle, the pressure withing the pitch pressure accumulators 112 is changing accordingly thereby driving the pitch pistons 114 to change position, more specifically decrease, the pitch angle of the blades to an operating pitch angle provided by the operation controller. Alternatively, when a wind turbine is controlled to stop, a pitch angle often called feather pitch angle will have to be reached and the operation controller will control the pitch pressure accumulators 112 to change the pressure in accordance with the needed position that thereby driving the pitch piston 114 to change, now increase, the angle in order to reach the so-called feather position.

The wind turbine rotor 106 of figure 1 further comprises a rotor lock system 122a and 122b. This system is typical in wind turbines and aims to ban the rotor from rotation when this is not necessary. Typical situations where a wind turbine rotor is locked are during service or maintenance of the wind turbine. Another case where the rotor may be locked is when the wind turbine is initially erected and awaits to start the operation or awaits for a wind turbine to be installed. Alternatively, the wind turbine may be stopped for example, due to a fault on the wind turbine operation that needs intervention of a technician to be fixed.

The wind turbine 100 of figure 1 is further provided with an operation controller. Additionally, a safety controller is also provided. None of these two controllers are depicted in figure 1. Must be understood that normally these two controllers are comprised within the wind turbine nacelle 102 or the wind turbine rotor 106 for connectivity reasons in a control room or in a control box. Alternatively, the controllers can also exist in the wind turbine tower 104. There is no need for the two controllers to be on the same room or box, they can also be separated in different environments within the same wind turbine 100.

The safety and the operation controllers are in direct connection and in a one-way communication. One-way communication means that the while the safety controller can send information to the operation controller the opposite is not possible to happen. The connection can be hard-wired via cable or wireless, as long as a stable connection is established, for example via an PROFINET protocol or any other suitable from the industry connection protocol. The safety controller is constantly operating as a supervision or redundancy controller of the operation controller. The purpose of it is to ensure the safe operation of the wind turbine as well as to ensure that the operation controller is controlling the operation of the wind turbine within safety limits. In that manner, the safety controller can prohibit damaging for the wind turbine operation actions.

The safety controller having its dedicated inputs, outputs as well as processor and memory can receive information from the wind turbine for example via the wind turbine sensors related to operating parameters, more specifically related to parameters affecting the safety of the wind turbine operation. Such parameters can be the pitch angle of the wind turbine blades, the condition of the pitching system, electrical parameters and other wind turbine operating parameters. Also, it is able to act whenever it is determined as needed and intervene in the operation of the wind turbine directly or indirectly by shutting down the operation. The processor gives the chance to the safety controller to execute simple logical functionalities. Additionally in its dedicated memory can store information regarding the safety parameters.

The operation controller on the other hand is the key controller of the wind turbine. It controls the operation of the wind turbine based on inputs from sensors as well as based on functions that have been already uploaded to the operation controller. Main purpose of the operation controller is to ensure maximum power production with less possible wind turbine fatigue. The operation controller is the main controller that will initiate the starting up of the wind turbine when the input from the sensors is indicating favoring conditions for operation. For starting up the wind turbine, the operation controller will send a command to the pitching system to move the wind turbine blades to a pitch angle range that is necessary for starting the operation of the wind turbine. This pitch angle range when the wind turbine is at rest (when rotor is not rotating) is approximately 90° and when starting up the operation controller commands the pitching system to drive the pitch angle to a pitch with a value of approximately 45° in order to obtain larger torque and therefore start the operation. Alternatively, the operation controller will initiate a stopping procedure for a wind turbine when this is needed based on conditions or when a fault is identified. For shutting down the wind turbine the operation controller will again command the pitching system to change the pitch angle from an operating range of approximately 0° (+/-10°) when in full mode operation to a feather position of approximately 90° again, thereby leading the wind turbine into a standstill. In procedures like the ones explained above, to achieve the correct pitch angles the pitching system changes its respective pressure within the pitch pressure accumulators 112. Change in the pressure leads in the movement of the pitch pistons 114 thereby driving the blade to rotate and change its pitch angle.

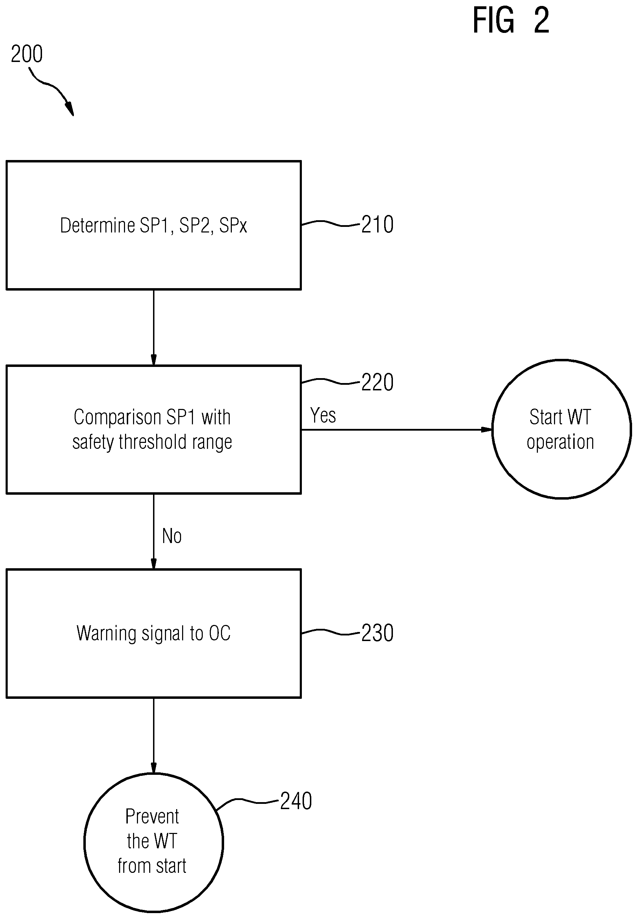

Figure 2 show a flowchart 200 of a method for controlling the operation of a wind turbine 100, comprising a rotor 106, at least two pitchable rotor blades 108a, b, and a pitching system 112 114, an operation controller, and a safety controller. At step 210, a value of at least one safety parameter is determined as input on the safety controller. The safety parameter may be a measured value directly from a sensor. Alternatively, the latest value stored in a memory or a database of the controller determining the value of the safety parameter before the initiation of the method can be used as well.

Since the safety controller can have more than one input, the determined safety parameters may be more than one. In a more specific embodiment of the method 200, the safety controller determines the value of at least two safety parameters, preferably three, and more preferably four safety parameters. Having determined more safety related paremeters, the safety controller has ensured that with the method step 210 that more parameters are checked and are considered when ensuring that the wind turbine 100 is safe to start operating via the operation controller. Should be understood here that any number of determined parameters that facilitate the execution of the method 200 and comprising the same steps shall be considered here.

In a more specific embodiment of the method 200, the at least one safety parameters is a parameter that is related to rotor 106 or the pitching system 112, 114 of the wind turbine 100. By determining the value of any of these two systems, the safety controller is ensuring that a crucial subsystem of the wind turbine 100 will not start the operation before ensuring that safety conditions are matched. In that manner, a detailed safety checked of the rotor 106 and/or the pitching system 112 114 is executed in advance.

When the at least one safety parameters is a rotor related safety parameter the safety controller ensures that the rotor 106 is suspended in a non-rotating position. This is advantageous because a free rotating rotor may lead in a faulty starting procedure that will damage the wind turbine 100. In an even more specific embodiment, the determined at least one safety parameters is the position of the rotor lock. The position of the rotor lock usually is identified as "1" meaning tha the rotor lock is engaged and "0" that the lock is disengaged from the rotor lock. When the lock signal is determined to be "1" (engaged), via a sensor, the rotor 106 is safely suspended and cannot freely rotate.. Also, the rotor 106 of a wind turbine 100 may be initially suspended when the wind turbine 100 is erected, installed but not yet operated for a first time. In this case, the rotor lock position is also "1" (engaged) and the rotor is suspended from rotation before its initial starting up upon connection to the grid.

Since more than one rotor locks existing in the wind turbine nowadays, the determined at least one safety parameter can be a sumation of all the available signals from a rotor lock position. For example, in a wind turbine with two rotor locks, two signals will be generated. When both rotor locks are engaged each signal will have the value "1", thereby the summed signal will also have the value "1" highlighting that the rotor lock is engaged. Contrary, when even one of the signals is indicated as value "0" the summed signal will never be "1" highlighting that at least one rotor lock is disengaged.

For determining the position of the lock, any sensor suitable for measuring the position may be used. This for example may be an inductive sensor that will send an electromagnetic pulse in order to identify if the rotor lock pin is in contact with the rotor brake disc. Alternatively, any other sensor type, analog or digital, that can identify the lock position, more precisely the rotor lock pin position in relation to the rotor brake disc, may be included.

In an alternative embodiment of the main method step 210, the at least one safety parameters is a safety parameter of the pitching system 112, 114. When this is the case, the determined safety parameter can be any of a pressure of an accumulator of the pithing system and/or a pitch position of the pitch piston of the pitching system and/or a pitch position direction of the pitch piston of the pitching system.

By determining the pressure within the pitch pressure accumulators, the safety system ensures that during the wind turbine 100 operation there is always sufficient pressure to correctly stop the wind turbine 100 in case of anticipated issues that may occur during the operation. Sufficient pressure shall be considered a pressure within a pressure range, for example 150 to 350 bars, more preferably a pressure within 180 to 350 bars. This range was identified as sufficient to be able to operate the wind turbine pitching system in any conditions, but not limited to this specific range since this may change depending on the wind turbine 100 type.

When the determined at least one safety parameters is the pressure within the pitch pressure accumulators, this for example can be determined with the use of an analogue pressure transducer or any other suitable sensor able to measure the pressure within the pressure accumulator 112 of a pitching system.

In alternative scenario the safety parameter may be the pitch position of the pitch piston of the pitching system 114. In this case the safety controller essentially determines, via the pitch position, that the pitch angle of the wind turbine blade needs to be within a safety minimum pitch angle range in order to initiate a staring procedure. The correct pitch position, in which a safe starting position may be initiated, was identified to be 90°or less, preferably in a range between 85° to 89°. Any values outside this range may lead to incorrect starting position and eventually incorrect operation of the wind turbine due pitch angle errors.

The pitch position can be determined by using for example analogue sensor. Preferably the use of a linear displacement sensor is proposed for this method but not limited to.

In yet another embodiment, the safety parameter can be a pitch direction of the pitch piston of the pithing system 114. Similarly, to the pitch position, the pitch direction needs to ensure that pitch position changes occurred are in the correct direction and within a safety range. This can be achieved by monitoring the pitch speed. Pitch speed is a value that shows how fast changes occuring in the pitch position of the pitch piston. Positive pitch direction indicates that the pitch position is moving to bigger pitch angles, while negative pitch direction indicates that the pitch position is moving into smaller pitch angles. Therefore, any determined value equal or smaller than 0, is an indication that the pitch position is moving into a direction that indicates operating procedure. Any determined value higher than 0 is an indication that the pitch position is moving into pitch angles that are not regarded as operating pitch position and therefore are not acceptable for the method 200.

The measurements for the pitch position direction determination can occur for example, by using the same sensors as in the monitoring of the pitch position, i.e., an analogue linear displacement sensor or any other sensor able to monitor the same.

In the next step 220, of the method 200, a comparison of the determined value of the at least one safety parameters from step 210 with a safety threshold takes place. In this essential step an "if..then.." scenario is executed by the safety controller. As shown in figure 2, when the comparison concludes that the value of the at least one safety parameter is not outside the safety threshold then the safety controller will not react, and the operation controller will initiate the starting up of the wind turbine 100. In the case that the latter is not true, the safety controller will generate a warning signal for the operation controller. This will happen since the safety controller recognized that the condition of the wind turbine 100 is not safe to initiate the immediate starting up of the wind turbine due to safety parameter being outside the safety threshold.

The safety threshold for example, can have the form of a single numerical value or multiple values or it can also be in a digital or analog form. In some cases, the threshold value can be a range of values. The safety threshold is uploaded/stored within the memory of the safety controller, and its form depends on the safety parameter that has to be compared with. For example, when the safety parameter is a rotor lock position, as proposed in one of the specific embodiments of the method 200, the safety threshold may be a static value depicted with a binary value "0" or "1". Alternatively, when the safety parameter is the pressure within the pitch pressure accumulators the safety threshold retrieved from the safety controller memory can have the form of a safety threshold range that the determined value of the pressure is compared with.

In step 230 a warning signal is also delivered from the safety controller to the operational controller. This signal can have the form of an alarm message or an alarm value. It is used to ensure that the wind turbine operation controller is informed that wind turbine systems, such as the rotor 106 or the pitching system 112, 114 , are not within safety conditions due to a wrongly safety parameter value.

In a specific embodiment of the method 200, the safety controller together with the warning signal also sends to the operation controller a default value. This default value is comprising the value that the at least on safety parameter must have in order to initiate the starting operation of the wind turbine. The safety controller has stored various default values for the respective safety parameters in its memory and upon determination of a mismatch, on the comparison step 220 of the method, the safety controller can also send the necessary value of the at least one safety parameters to the operation controller. In an even more specific embodiment, the default value has to be a value equal or bigger than the value safety threshold. In that manner, the operation controller will be equipped with the appropriate value for controlling the operation of the wind turbine 100. Alternatively, and if the operation controller cannot control the pitching system, once the power is switched of from the pitching system the valves within the pitching system are resettled due to loss of power and the default value is automatically achieved.

In the last step 240 of the method 200, the safety controller prevents the wind turbine 100 from starting up. During a wind turbine starting up initiation, the operational controller will command the pitching system to start rotating the blades in order to reach a specific pitch angle thereby making the rotor to slowly rotate. With the method 200, if it is recognized that at least one safety paremeters are not within safety threshold will block the wind turbine operational controller from doing so and therefore prevent the starting up. Main advantage of this is that the safety of the wind turbine 100 is not compromised and the wind turbine 100 will not operate with a system prone to possible malfunctions during operation.

In an embodiment of the method 200, the prevention of starting up occuring via the direct prevention of power to reach the pitching system 112, 114. In that manner even if the operational controller wants to start commanding the pitching system, the pitching system will not be responsive. As an auxiliary system for the wind turbine 100 the pitching system 112, 114 commonly is powered via power from the grid or an alternative power source such as power storage. The power from any of these elements is reaching the pitching system through an auxiliaries' converter, or an auxiliary transformer. Therefore, the safety controller is able to switch off the power received by for example opening an electrical contact thereby cutting off the power supply to the pitching system and preventing the pitching system from being controlled. Once the prevention of starting up takes place, the electrical contact is closed again, and power can flow again to the pitching system.

In a further embodiment of the method 200, once the operation controller receives the warning signal and the starting up of the wind turbine is prevented, will control the at least one rotor related safety parameter and/or the at least one pitching system related safety parameter 112, 114 and arrange them in such a manner that their values are equal to the default value. This embodiment is particularly advantageous because upon prevention of the starting of the wind turbine, may be the needed that the wind turbine starting procedure may be initiated again. In that sense, the value of the at least one safety related parameter that now is updated within the operation controller memory has to be assign to the respective wind turbine system. Upon doing so, another initiation of the method 200 is able to be started with the respective steps being implemented again. If the wind turbine starting up is once more prevented by the method, the method will be executed until the correct safe value is assigned to the at least on safety parameter.

In yet another embodiment, the precondition of the wind turbine is specified, in order to be able to carry the method 200. In these embodiments it is highlighted that the operation controller had already stopped the wind turbine due to a fault before the execution of the method. In that manner it is achieved that the wind turbine had already been stopped and the rotor 106 of the wind turbine 100 is not rotating. In an alternative embodiment, the operation controller had never controlled the operation of the wind turbine before, and the wind turbine was never operated to produce power. It is possible that the method 200 will be executed at the very first time that the wind turbine 100 will need to start its operation. For ensuring that the wind turbine 100 can be safely operated, the safety controller will execute at least once the method 200 and if it is determined that the safety parameters are not within safety limits, then the operation controller will stop the starting of the wind turbine 100 and abort its first operation.

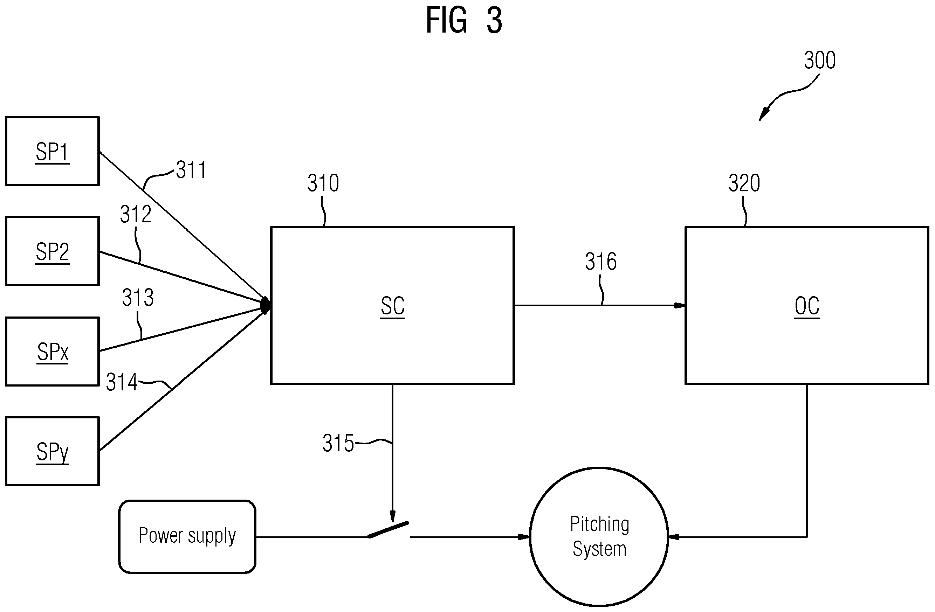

In Figure 3, an exemplary safety system 300 able to carry the method 200 is presented. The safety system 300 comprising its own memory and processor (not shown in the figure). Such safety system may comprise the safety controller 310 and operation controller 320. Must be understood that comprising does not necessarily means that the safety system is a physical box that contains two physical controllers, rather than any system that has its own memory and processor and is able to be in connection with the safety controller and the operation controller. It is possible that the safety controller is located in the nacelle of the wind turbine 100 and the operation controller in the rotor 106 of the wind turbine 100. In this case, a safety system according to this exemplary embodiment shall be considered the system that combines the operation of these two controllers and has the means to carry the method 200. In this embodiment, the safety controller 310 has at least one input 311, 312, 313, 314 and at least one output 316, 316.

The safety system 300 is programmable and able to execute all the steps of the method 300 via the comprised safety controller 310 as well as the operation controller 320.

In the last embodiment of the invention, a wind turbine 100 comprising a rotor 106, at least two pitchable rotor blades 108a, 108b, a pitching system 112, 114 and an operation controller 320 and a safety controller 310 wherein the safety controller is configured to determine a value for at least one safety paremeters, compare the value of at least one safety parameters with a safety threshold and if the value is different from the safety threshold then deliver a warning signal to the operation control and prevent the wind turbine 100 from starting up.

The invention has been explained with reference to one or more embodiments, features of one embodiment may be applicable or combined to one or more other embodiments. Various changes and modifications can be made without deviating from the main idea of the invention as defined in the below set of claims.

## Claims

1. A method for controlling the operation of a wind turbine (100), the wind turbine comprising a rotor (106), at least two pitchable rotor blades (108a, 108b), a pitching system (112, 114), an operation controller, and a safety controller
wherein the method comprising the steps of:
- determine a value for at least one safety paremeters with the safety controller
- compare the value of the at least one safety parameters with at least one safety threshold and if the value is different from the at least one safety threshold
o deliver a warning signal to the operation controller
o and prevent the wind turbine (100) from starting up.

2. A method for controlling the operation according to claim 1, wherein the step of preventing the wind turbine (100) from starting up further comprising
switching off the power from the pitching system (112, 114) .

3. A method for controlling the operation according to claim 2, further comprising
setting the value for the at least one safety parameters to a default value.

4. A method according to claim 3, wherein the default value is a value equal or higher than the safety threshold.

5. A method according to claim 4, wherein the operation controller upon receiving the warning signal further controls the wind turbine (100) such as the at least one rotor (106) related safety parameter and/or the at least one pitching system (122, 114) related safety parameter is equal to the default value.

6. A method according to any preceding claims, wherein the step of determining the at least one safety parameters further comprising
the determination of at least one rotor (106) related safety parameter and/or at least one pitching system (112, 114) related safety parameter.

7. A method according to claim 6, wherein the step of determining the at least one rotor (106) related safety parameter comprises determining the value of a rotor lock position.

8. A method according to claim 6, wherein the step of determining the at least one pitching system (112, 114) related safety parameter comprises
determining the value of a pressure of a pitch accumulator (112) of the pitching system and/or a pitch position of a pitch piston (114) of the pitching system and/or a pitch position direction of a pitch piston (114) of the pitching system.

9. A method according to any previous claims,
wherein the determined at least one safety parameters includes determining the value of at least two, preferably three, more preferably four safety parameters.

10. A method according to any of the preceding claims,
wherein the operation controller had already stopped the wind turbine (100) due to a fault before the execution of the method.

11. A method according to any previous claim, wherein the wind turbine (100) operation controller had never controlled the operation of the wind turbine (100) before, and the wind turbine (100) was never operated to produce power.

12. A safety system (300) comprising a memory and a processor and means for carrying out the method of any of the claims 1 to 11.

13. A wind turbine (100) comprising a rotor (106), at least two pitchable rotor blades (108a, 108b), a pitching system (112, 114), an operation controller and a safety controller wherein
the safety controller is configured to
- determining a value for at least one safety parameters,
- comparing the value of the at least one safety parameters with at least one safety threshold and if the value is different from the at least one safety threshold
o delivering a warning signal to the operation controller
o and preventing the wind turbine (100) from starting up.
